(19) **Europäisches Patentamt European Patent Office Office européen des brevets**

(11) **EP 4 161 123 A1**

(12) **EUROPEAN PATENT APPLICATION**
published in accordance with Art. 153(4) EPC

(43) Date of publication:
**05.04.2023 Bulletin 2023/14**

(21) Application number: **21813230.6**

(22) Date of filing: **04.03.2021**

(51) International Patent Classification (IPC):
***H04W 16/14*** (2009.01)     ***H04W 28/06*** (2009.01)

(52) Cooperative Patent Classification (CPC):
**H04W 16/14; H04W 28/06**

(86) International application number:
**PCT/CN2021/079010**

(87) International publication number:
**WO 2021/238323 (02.12.2021 Gazette 2021/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.05.2020  CN 202010455319**

(71) Applicant: **ZTE Corporation**
**Shenzhen, Guangdong  518057 (CN)**

(72) Inventors:
- **LI, Bin**
  **Shenzhen, Guangdong 518057 (CN)**
- **LIU, Weiwei**
  **Shenzhen, Guangdong 518057 (CN)**

(74) Representative: **Aipex B.V.**
**P.O. Box 30223**
**3001 DE Rotterdam (NL)**

(54) **WIRELESS COMMUNICATION METHOD, TERMINAL, BASE STATION, SYSTEM, ELECTRONIC DEVICE AND MEDIUM**

(57)    Provided is a wireless communication method for a shared frequency spectrum resource, which wireless communication method is applied to a terminal side, and comprises: determining the direction of an interference signal on the basis of the interference signal, wherein the interference signal comes from a third-party communication system which shares a frequency with the current communication system; and formulating a communication wave beam receiving/transmitting policy on the basis of the relative position of a terminal relative to a base station of a serving cell, and the direction of the interference signal. Further provided are a terminal, a base station, a wireless communication system, an electronic device, and a medium.

FIG. 1

## Description

This application claims priority to Chinese Patent Application No. 202010455319.9 filed with the China National Intellectual Property Administration (CNIPA) on May 26, 2020, the disclosure of which is incorporated herein by reference in its entirety.

## TECHNICAL FIELD

Embodiments of the present disclosure relate to the field of communications, for example, a wireless communication method, a terminal, a base station, a wireless communication system for sharing spectrum resources, an electronic device, and a computer-readable medium.

## BACKGROUND

With the rapid development of wireless communication technologies at present, spectrum resources become more and more precious, the mandated use of the spectrum resources by governments becomes more and more strict, the mandated cost of the spectrum resources becomes more and more expensive, the difficulty of establishing wireless communication systems, such as some private networks (for example, the ocean, high-speed railway and ground-to-air wireless communication networks) is increased. Thus, the network capacity is limited.

The spectrum resources owned by traditional operators are mainly used for the coverage of terrestrial networks, and part of the frequency resources are used only in densely populated areas, such as cities, for hot spot supplement and indoor coverage. For private networks represented by the ground-to-air coverage private network and the ocean coverage private network, there is a relative high requirement for a coverage distance of a cell. Moreover, to save the cost for establishing a station, the coverage distance of a single cell is generally more than 100 kilometers (km).

To make efficient use of the precious spectrum resources, it is necessary and feasible to design a wireless communication system that uses the same spectrum as a terrestrial wireless communication system and supports an ultra-far coverage radius. However, the transmit power of the wireless communication system needs to be lower than a fixed threshold, so as to solve the mutual interference problem between different systems. Based on the limited transmit power, how to satisfy the requirement of the coverage distance of the single cell is a difficult problem to be solved urgently in the industry and is also a major obstacle to the wireless communication systems sharing the same frequency.

## SUMMARY

Embodiments of the present disclosure provide a wireless communication method, a terminal, a base station, a wireless communication system for sharing spectrum resources, an electronic device, and a computer-readable medium, so as to reduce frequency interference between systems and achieve an ultra-far coverage radius based on shared spectrum resources.

An embodiment of the present disclosure provides a wireless communication method for sharing spectrum resources. The method includes determining a relative position of the terminal with respect to a base station of a serving cell based on a physical position of the base station of the serving cell and a current physical position of the terminal; determining a direction of an interference signal based on the interference signal, where the interference signal is from a third party communication system sharing a frequency with a current communication system; and formulating a transceiving strategy of a communication beam based on the relative position and the direction of the interference signal.

An embodiment of the present disclosure provides a wireless communication method for sharing spectrum resources. The method includes determining a relative position of a terminal with respect to the base station of a serving cell based on a current physical position reported by the terminal and a physical position of the base station of the serving cell; determining a direction of an interference signal based on the interference signal, where the interference signal is from a third party communication system sharing a frequency with a current communication system; and formulating a transceiving strategy of a communication beam based on the relative position and the direction of the interference signal.

An embodiment of the present disclosure provides a terminal for sharing spectrum resources. The terminal includes a relative position determination module, an interference signal direction determination module, a strategy formulation module, and a transmission module. The relative position determination module is configured to determine a relative position of the terminal with respect to a base station of a serving cell based on a physical position of the base station of the serving cell and a current physical position of the terminal. The interference signal direction determination module is configured to determine a direction of an interference signal based on the interference signal, where the interference signal is from a third party communication system sharing a frequency with a current communication system. The strategy formulation module is configured to formulate a transceiving strategy of a communication beam based on the relative position and the direction of the interference signal. The transmission module is configured to receive and/or transmit the communication beam based on the transceiving strategy.

An embodiment of the present disclosure provides a base station for sharing spectrum resources. The base station includes a relative position determination module, an interference signal direction determination module, a strategy formulation module, and an array antenna. The relative position determination module is configured to determine a relative position of a terminal with respect to the base station of a serving cell based on a current physical position reported by the terminal and a physical position of the base station of the serving cell. The interference signal direction determination module is configured to determine a direction of an interference signal based on the interference signal, where the interference signal is from a third party communication system sharing a frequency with a current communication system. The strategy formulation module is configured to formulate a transceiving strategy of a communication beam based on the relative position and the direction of the interference signal. The array antenna is configured to receive and/or transmit the communication beam based on the transceiving strategy.

An embodiment of the present disclosure provides a wireless communication system for sharing spectrum resources. The wireless communication system includes an ultra-far coverage base station and a third party communication base station, where the ultra-far coverage base station is the base station for sharing spectrum resources according to an embodiment of the present disclosure, and a distance between the ultra-far coverage base station and the third party communication base station exceeds a preset physical isolation distance.

An embodiment of the present disclosure provides an electronic device. The electronic device includes one or more processors, a memory storing one or more programs, and one or more input/output (I/O) interfaces. The one or more programs, when executed by the one or more processors, cause the one or more processors to perform any wireless communication method for sharing spectrum resources described above. The one or more I/O interfaces are connected between the one or more processors and the memory and configured to implement an information interaction between the one or more processors and the memory.

An embodiment of the present disclosure provides a computer-readable medium, which is configured to store a computer program which, when executed by a processor, causes the processor to perform any wireless communication method for sharing spectrum resources described above.

BRIEF DESCRIPTION OF DRAWINGS

The drawings are used to provide an understanding of embodiments of the present disclosure, constitute a part of the specification, explain the present disclosure in conjunction with the embodiments of the present disclosure, and do not limit the present disclosure. In the drawings:

FIG. 1 is a flowchart of a wireless communication method for sharing spectrum resources according to an embodiment of the present disclosure;
FIG. 2 is a schematic diagram of an ultra-far coverage communication system and a terrestrial communication system according to an embodiment of the present disclosure;
FIG. 3 is a flowchart of another wireless communication method for sharing spectrum resources according to an embodiment of the present disclosure;
FIG. 4 is a structural diagram of a time-division multiple access radio frame employed in a wireless communication method for sharing spectrum resources according to an embodiment of the present disclosure;
FIG. 5A is a diagram illustrating a time domain subframe configuration in an interference coordination strategy of an ultra-far coverage communication system and a terrestrial communication system with the same frequency in a wireless communication method for sharing spectrum resources according to an embodiment of the present disclosure;
FIG. 5B is a diagram illustrating another time domain subframe configuration in an interference coordination strategy of an ultra-far coverage communication system and a terrestrial communication system with the same frequency in a wireless communication method for sharing spectrum resources according to an embodiment of the present application;
FIG. 6 is a schematic diagram illustrating pointing directions of different narrow beams when a terminal performs neighbor cell measurement according to an embodiment of the present disclosure;
FIG. 7 is a flowchart of another wireless communication method for sharing spectrum resources according to an embodiment of the present disclosure;
FIG. 8 is a flowchart of another wireless communication method for sharing spectrum resources according to an embodiment of the present disclosure;
FIG. 9 is a flowchart of another wireless communication method for sharing spectrum resources according to an embodiment of the present disclosure;
FIG. 10 is a flowchart of another wireless communication method for sharing spectrum resources according to an embodiment of the present disclosure;
FIG. 11 is a diagram illustrating geographic locations of an ultra-far coverage communication system and a terrestrial communication system according to an embodiment of the present disclosure;
FIG. 12 is a structural diagram of a radio frame of a frequency-division multiple access ultra-far coverage communication system according to an embodiment of the present disclosure;
FIG. 13 is a block diagram illustrating a principle of a terminal for sharing spectrum resources according to an embodiment of the present disclosure;
FIG. 14 is a block diagram illustrating a principle of another terminal for sharing spectrum resources according to an embodiment of the present disclosure; and
FIG. 15 is a block diagram illustrating compositions of an electronic device according to an embodiment of the present disclosure.

DETAILED DESCRIPTION

In order to enable those skilled in the art to better understand the technical solutions of the present disclosure, a wireless communication method, a terminal, a base station, a wireless communication system for sharing spectrum resources, an electronic device, and a medium according to the present disclosure are described below in conjunction with the drawings.

Example embodiments are described more completely hereinafter with reference to the drawings, but the example embodiments may be embodied in different forms and are not to be construed as limited to the embodiments set forth herein. As used herein, the term "and/or" includes any and all combinations of one or more of the associated listed items.

Terms used herein are used for describing particular embodiments and are not intended to limit the present disclosure. As used herein, singular forms "one" and "the" are intended to include a plural form, unless otherwise clearly specified in the context. Further, it is to be understood that the terms "include" and/or "made of" used in the specification specify the existence of the feature, entity, step, operation, element, and/or component, without excluding the existence or addition of one or more other features, entities, steps, operations, elements, components, and/or combinations thereof. Unless otherwise defined, all the terms (including technical and scientific terms) used herein have the same meanings as commonly understood by those of ordinary skill in the art. Further, it is to be understood that terms, such as those defined in commonly used dictionaries, are to be interpreted as having meanings consistent with their meanings in the context of the related art and the present disclosure and are not to be interpreted in an idealized or overly formal sense unless expressly so defined herein.

Embodiments of the present disclosure are the technical solutions provided for the case where a terrestrial communication system and an ultra-far coverage communication system share spectrum resources. The terrestrial communication system may be a communication system such as a 3rd-Generation Mobile Communication system (3G), a 4th-Generation Mobile Communication system (4G), and a 5th-Generation Mobile Communication system (5G) that are currently used. The ultra-far coverage communication system is a communication system with a coverage radius of up to 300 km and is a private communication system for the ocean, high-speed railway, and aviation. Both the terrestrial communication system and the ultra-far coverage communication system are referred to as wireless communication systems.

For example, the ultra-far coverage communication system is an air coverage wireless communication system, the terminal is an airborne terminal installed on an airplane, and a frequency band used by the ultra-far coverage communication system interferes with a frequency band used by a terrestrial commercial 5G communication system. The wireless communication method and apparatus for sharing spectrum resources according to the embodiments of the present disclosure can solve the mutual interference between the two communication systems while satisfying an ultra-far coverage radius under the premise of relatively small transmit power.

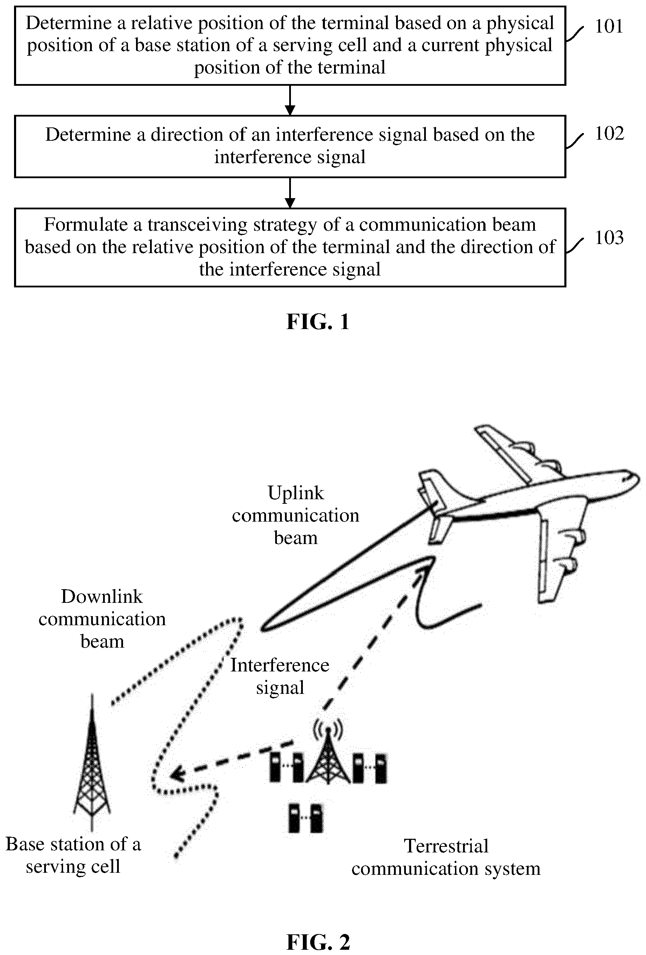

An embodiment of the present disclosure provides a wireless communication method for sharing spectrum resources, where the wireless communication method is applied to the terminal. FIG. 1 is a flowchart of a wireless communication method for sharing spectrum resources according to an embodiment of the present disclosure. Referring to FIG. 1, the wireless communication method for sharing spectrum resources includes the following.

In 101, a relative position of the terminal is determined based on a physical position of a base station of a serving cell and a current physical position of the terminal.

The base station of the serving cell refers to a base station of the ultra-far coverage communication system. Unlike a base station of the terrestrial communication system, a coverage radius of the base station of the serving cell is more than 100 km. The physical position of the base station of the serving cell is basically fixed, and may be obtained through a satellite positioning system such as the Global Positioning System (GPS), or may be prestored in the terminal. For example, after the base station of the serving cell is established, the physical position of the base station of the serving cell is stored in a read-only memory (ROM) of the terminal, and the terminal may acquire the physical position of the base station of the serving cell by looking up a table according to a physical cell identifier (PCI) of the accessed serving cell and an identifier number of a base station of a Next Generation NodeB (gNB).

In some embodiments, when the physical position of the base station of the serving cell changes, for example, a new base station is added or the base station is migrated in the serving cell, the changed serving cell or the base station of the serving cell informs the terminal through air interface broadcast or a dedicated channel, and the terminal stores the changed base station of the serving cell in the ROM of the terminal.

In some embodiments, the physical position of the base station of the serving cell includes the longitude, latitude, and altitude of the base station of the serving cell and orientation information of an active antenna unit (AAU) of the serving cell.

The current physical position of the terminal may be obtained through a positioning system such as the GPS, and the current physical position of the terminal includes information such as the longitude, latitude, and altitude.

In some embodiments, the terminal reports physical information of the terminal to the base station of the serving cell periodically or in a time-triggered manner through an air interface, where the physical information of the terminal includes the longitude, the latitude, the altitude, the orientation of the terminal, and a movement speed of the terminal.

To ensure the stability of the ultra-far coverage communication system and the forming accuracy of a communication beam received and transmitted by the terminal, a period at which the terminal reports the position of the terminal may be set to 1 second.

In 102, a direction of an interference signal is determined based on the interference signal.

The interference signal is from a third party communication system sharing a frequency with a current communication system, for example, the 5G terrestrial communication system. The direction of the interference signal is determined according to the interference signal, so as to reduce interference with the terrestrial communication system.

In 103, a transceiving strategy of a communication beam is formulated based on the relative position of the terminal and the direction of the interference signal.

In some embodiments, the transceiving strategy of the terminal includes a pointing direction and a pattern of the communication beam from the terminal to the base station of the serving cell. The terminal specifies the pointing direction and pattern of the communication beam towards the base station of the serving cell according to the relative position of the terminal with respect to the base station of the serving cell and the direction of the interference signal.

The communication beam includes a transmit communication beam and a receive communication beam, where the transmit communication beam is configured for sending a communication signal to the base station of the serving cell. The receive communication beam includes a service beam and a measurement beam, where the service beam is configured for receiving the communication signal from the base station of the serving cell, and the measurement beam is configured for receiving a measurement signal from a neighbor cell of the serving cell. In addition, the transmitted and received communication beams between the base station of the serving cell and the terminal may be radio frequency analog beams or baseband digital beams.

In 103, the pointing direction and pattern of the communication beam are dynamically adjusted with the relative position of the terminal, that is, the terminal uses an array antenna with an adjustable beam pointing direction, and the pointing direction and pattern of the communication beam are calculated according to the relative position of the terminal with respect to the base station of the serving cell, so that the transmit power of the communication beam is reduced and signal interference is reduced under the condition of the same propagation distance.

In some embodiments, both the terminal and the base station of the serving cell use the array antenna with the adjustable beam pointing direction, that is, a forming antenna, and the forming antenna dynamically adjusts the pointing direction and pattern of the communication beam towards the base station of the serving cell based on the relative position of the terminal. That is, an angle of arrival (AoA) or a direction of arrival (DOA) is calculated through a beam scanning algorithm based on the relative position of the terminal, a forming weight value is obtained, and the pointing direction and pattern of the communication beam are obtained based on the forming weight value. In some embodiments, the terminal may determine a downlink forming weight value through uplink received data of the ultra-far coverage communication system.

In some embodiments, the interference signal is from the 5G communication system, such as a 5G base station or a 5G terminal, the communication beam of the terminal is designed using a maximum signal-to-noise ratio criterion, and a null is formed at an interference position, so as to reduce an interference level while a receive gain is acquired.

FIG. 2 is a schematic diagram of an ultra-far coverage communication system and a terrestrial communication system according to an embodiment of the present disclosure. A line-shaped dashed line represents the interference signal of the terrestrial communication system, a solid line represents the communication beam transmitted/received by the terminal, and the dot-shaped dashed line represents the communication beam transmitted/received by the serving cell.

For ease of description, only the interference signal of the 5G base station causing interference to the ultra-far coverage communication system is described below. As shown in FIG. 2, the terminal continuously receives the interference signal of the 5G base station during movement, adjusts the pattern of the communication beam based on the interference signal, and forms the null at the interference position. At the same time, the terminal adjusts the pointing direction of the communication beam based on the relative position of the terminal with respect to the serving cell so that the communication beam from the terminal to the serving cell is the strongest.

In some embodiments, the terminal obtains an expected pointing direction of the communication beam based on the relative position of the terminal with respect to the serving cell and then calculates an optimal transmit weight value based on the interference signal and the expected pointing direction using the maximum signal-to-noise ratio criterion, so as to form the null at the interference position, thereby reducing the interference level while obtaining the receive gain.

In this embodiment, the communication beam adopts a time-division duplexing (TDD) radio frame slot structure to support the communication system with a coverage radius more than 300 km. A length of an uplink and downlink guard period (GP) of the communication beam may be obtained according to formula (1) described below.

$$GP_{length} = ceil(\frac{2L}{c \times step}) \quad (1)$$

*L* denotes a maximum coverage distance of a single cell in the ultra-far coverage communication system, c denotes the speed of light and has a value of $3 \times 10^8$ m/s, and *step* denotes a minimum time domain interval of the ultra-far coverage communication system. When the ultra-far coverage communication system is a long-term evolution (LTE) system, a value of *step* is 1ms. When the ultra-far coverage communication system is a 5G New Radio (NR) system, if a subcarrier spacing is 30 KHz, the value of *step* is 0.5ms, and a function *ceil* denotes rounding up.

In some embodiments, since a cell coverage distance of the ultra-far coverage communication system is relatively large, far exceeding the maximum coverage distance defined by a normal NR protocol, a time offset and a frequency offset of the communication beam exist, increasing the design difficulty and implementation complexity of the wireless communication system.

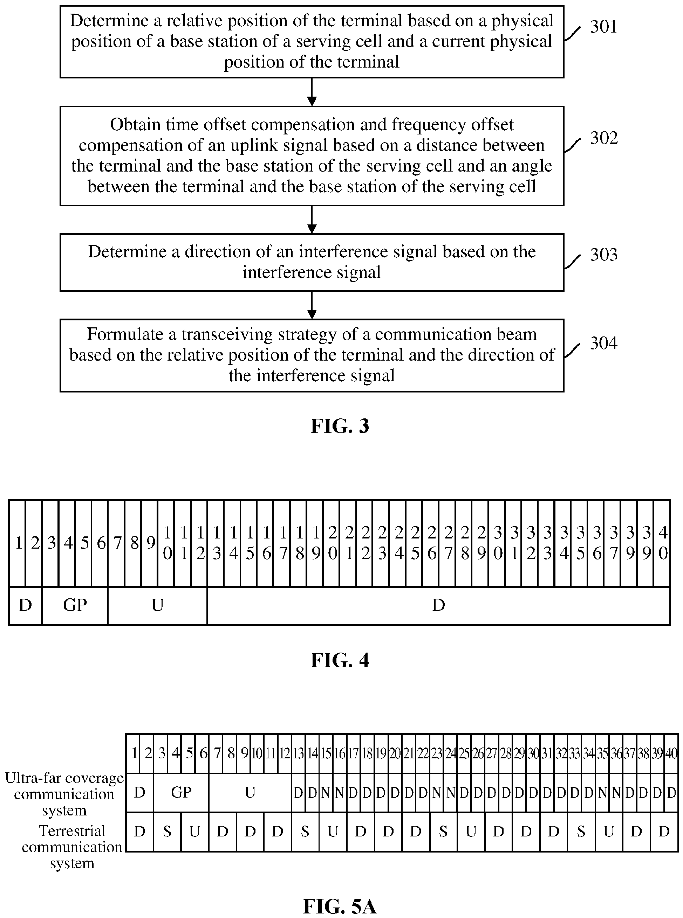

FIG. 3 is a flowchart of another wireless communication method for sharing spectrum resources according to an embodiment of the present disclosure. Referring to FIG. 3, the wireless communication method for sharing spectrum resources includes the following.

In 301, a relative position of the terminal is determined based on a physical position of a base station of a serving cell and a current physical position of the terminal.

In 301, the relative position of the terminal is determined based on the physical position of the base station of the serving cell and the current physical position of the terminal in the same manner as in 101 of the preceding embodiment. The details are not repeated here.

In 302, time offset compensation and frequency offset compensation of an uplink signal are obtained based on a distance between the terminal and the base station of the serving cell and an angle between the terminal and the base station of the serving cell.

In some embodiments, the distance between the terminal and the base station of the serving cell and the angle between the terminal and the base station of the serving cell are calculated based on the physical position of the terminal and the physical position of the base station of the serving cell. The time offset compensation and the frequency offset compensation of the uplink signal are obtained based on the distance between the terminal and the base station of the serving cell and the angle between the terminal and the base station of the serving cell, and the uplink signal of the terminal is compensated based on the time offset compensation of the uplink signal, so as to reduce the design difficulty and implementation complexity of the wireless communication system.

In some embodiments, the time offset compensation is obtained through formula (2) and formula (3).

$$\Delta \bar{t} = \Delta \bar{t}_1 + \Delta \bar{t}_2 \quad (2)$$

$$\Delta \bar{t}_1 = round(\frac{d}{v \times Z}) \times Z \quad (3)$$

$\Delta \bar{t}$ denotes a time offset value between the terminal and the ultra-far coverage communication system, $\Delta \bar{t}_1$ denotes a coarse time offset calculated according to the distance, $\Delta \bar{t}_2$ denotes a fine time offset, $\Delta \bar{t}_1$ denotes a time offset value calculated for the terrestrial communication system such as 5G according to a physical random access channel (PRACH), *d* denotes a distance difference between a target base station and the terminal, *v* denotes the speed of light and has a value of $3 \times 10^8$ m/s, *Z* denotes an accuracy adjustment factor and is calculated according to the Pramble format and performance selected by the system, and a *round* () function denotes taking an adjacent quantized value and is equivalent to rounding when a quantization accuracy is an integer.

In other embodiments, the time offset compensation and the frequency offset compensation of the uplink signal are obtained based on the distance between the terminal and the base station of the serving cell and the angle between the terminal and the base station of the serving cell, and then the uplink signal of the terminal is compensated based on the time offset compensation and the frequency offset compensation of the uplink signal, that is, the uplink signal is pre-compensated for the time offset and frequency offset.

In 303, a direction of an interference signal is determined based on the interference signal.

The interference signal is from the terrestrial communication system sharing a frequency with the ultra-far coverage communication system. After receiving the interference signal, the terminal determines the direction of the interference signal according to the interference signal, so as to reduce the interference to the terrestrial communication system.

In 304, a transceiving strategy of a communication beam is formulated based on the relative position of the terminal and the direction of the interference signal.

In 304, the communication beam of the terminal is designed using the maximum signal-to-noise ratio criterion, and a null is formed at an interference position, so as to reduce an interference level while a receive gain is acquired.

For example, both the 5G base station and the 5G terminal in the terrestrial communication system may cause interference to the communication beam of the ultra-far coverage communication system. In other words, the interference signal may come from the 5G base station and the 5G terminal. When the ultra-far coverage communication system receives the interference signal of the terrestrial communication system, the pattern of the communication beam is adjusted based on the direction of the interference signal.

In this embodiment, the terminal calculates the distance between the terminal and the base station of the serving cell by using the acquired position of the base station (antenna) of the serving cell and calculates an initial coarse time offset according to a distance propagation formula in an initial access stage or a handover stage, so as to actively perform compensation and adjustment on the communication beam transmitted in the uplink. The time offset compensation is calculated in the same manner as in 102 of the preceding embodiment. The details are not repeated here.

In some embodiments, to reduce interference between the ultra-far coverage communication system and the terrestrial communication system, the communication beam adopts a TDD radio frame slot structure.

FIG. 4 is a structural diagram of a time-division multiple access radio frame employed in a wireless communication method for sharing spectrum resources according to an embodiment of the present disclosure. As shown in FIG. 4, the radio frame has a fixed duration of 20ms and includes 40 slots, where each slot occupies 0.5ms. AGP is 2ms, occupies four slots, and can support a cell coverage radius of up to 300 km. The number of uplink slots U is 6, and the number of downlink slots D is 30, where definitions of a resource block (RB) and an orthogonal frequency-division multiplexing (OFDM) symbol in each slot are consistent with a 3rd Generation Partnership Project (3GPP) 5G protocol.

In some embodiments, before or after 302, the wireless communication method for sharing spectrum resources further includes acquiring a downlink slot position of the interfered third party communication system; and stopping calling an uplink slot position corresponding to the downlink slot position of the third party communication system in the communication beam based on the downlink slot position of the interfered third party communication system.

In some embodiments, the interfered third party communication system may be a 3G, 4G or 5G terrestrial communication system. Only the 5G terrestrial communication system is used as an example for description below.

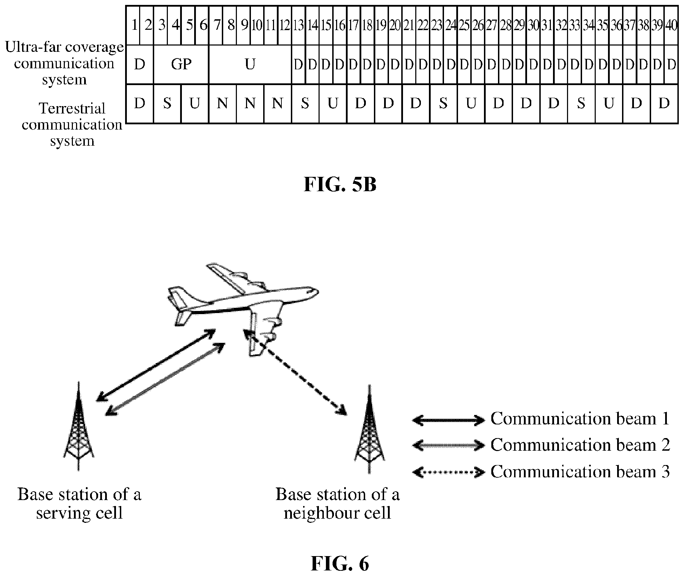

FIG. 5A is a diagram illustrating a time domain subframe configuration in an interference coordination strategy of an ultra-far coverage communication system and a terrestrial communication system with the same frequency in a wireless communication method for sharing spectrum resources according to an embodiment of the present disclosure. FIG. 5B is a diagram illustrating another time domain subframe configuration in an interference coordination strategy of an ultra-far coverage communication system and a terrestrial communication system with the same frequency in a wireless communication method for sharing spectrum resources according to an embodiment of the present application. The terrestrial communication system may adopt the 5G terrestrial communication system. The ultra-far coverage communication system still adopts a 20ms radio frame structure, the terrestrial communication system adopts a 5 ms radio frame structure, and the time of the ultra-far coverage communication system and the 5G terrestrial communication system is synchronized through conventional means such as the GPS. However, due to the different frame structures used, the mutual interference of uplink and downlink slots between the systems is caused.

When the uplink slot of the terrestrial communication system is interfered by the ultra-far coverage communication system in the downlink, the downlink performance of the terrestrial communication system is deteriorated. Information may be exchanged between the ultra-far coverage communication system and the terrestrial communication system. The terrestrial communication system informs the ultra-far coverage communication system of a position of a slot which is interfered, and the terminal in the ultra-far coverage communication system stops downlink scheduling at the corresponding slot D and configures the slot to be N subframes, thereby reducing uplink slot interference to the terrestrial communication system.

As shown in FIG. 5A, in the radio frame structure of the terrestrial communication system, the fifteenth slot and the sixteenth slot, the twenty-fifth slot and the twenty-sixth slot, and the thirty-fifth slot and the thirty-sixth slot are the uplink slots U, and in the radio frame structure of the corresponding ultra-far coverage communication system, the fifteenth slot and the sixteenth slot, the twenty-fifth slot and the twenty-sixth slot, and the thirty-fifth slot and the thirty-sixth slot are configured to be N subframes, so as to avoid interference of the ultra-far coverage communication system to the terrestrial communication system.

In some embodiments, the terminal simultaneously supports three baseband digital communication beams (hereinafter referred to as narrow beams for ease of description), each of which is a narrow beam, which is divided into two categories. Firstly, the narrow beam, such as a transmit communication beam and a service receive communication beam, always points to the position of the base station of the serving cell where the terminal is located and includes, but is not limited to, an evolved NodeB (eNB)/gNB, which is mainly used for services such as data transmission of the terminal. Secondly, for example, a measurement receive communication beam points from the terminal to the position of a neighbor station of the serving cell where the terminal is located and is mainly used for measurement and other behaviors of the terminal, so as to ensure cell handover and other functions of the terminal in the ultra-far coverage communication system.

FIG. 6 is a schematic diagram illustrating pointing directions of different narrow beams when a terminal performs neighbor cell measurement according to an embodiment of the present disclosure. As shown in FIG. 6, the terminal is provided with one transmit communication beam and one service receive communication beam pointing to the base station of the serving cell where the terminal is located so that the uplink and downlink of the ultra-far coverage communication system support single-user multiple-input and multiple-output (SU-MIMO) of the maximum two streams, the adopted uplink and downlink transmission mode is performed according to conditions of the ultra-far coverage communication system and the channel, and the principle and determination method of the ultra-far coverage communication system are consistent with that of the conventional 5G system and are not limited in this embodiment. The terminal is provided with one measurement receive communication beam, so as to ensure cell handover and other functions of the terminal in the ultra-far coverage communication system.

Three narrow beams of the terminal operate as follows: in the case where a downlink received power level of the serving cell, that is, reference signal received power (RSRP) or reference signal received quality (RSRQ), received by the terminal is less than a downlink received power level threshold value, it is considered that the terminal has left an inner region of the serving cell and the cell handover may occur. In this case, the terminal still uses narrow beam 1 and narrow beam 2 to point to the serving cell for uplink transmission and downlink reception. At the same time, the terminal receives the downlink received power level of the neighbor cell through narrow beam 3. In some embodiments, in the case where the serving cell where the terminal is located includes multiple neighbor cells, downlink received power levels of the multiple neighbor cells are measured in sequence, that is, the narrow beam 3 points to the neighbor cells of the serving cell in sequence, so as to obtain the downlink received power levels of the different neighbor cells.

In some embodiments, the serving cell where the terminal is located includes not only the multiple neighbor cells, and the multiple neighbor cells belong to different gNB/eNB stations. The terminal may be alternately aligned with the different gNB/eNB stations in a time-division manner, so as to measure the different gNB/eNB stations.

In this embodiment, the duration of the radio frame of the communication beam is 20ms, and at least one (the number depending on the number of single-sidebands (SSBs)) downlink transmission of a cell reference signal (CRS) occurs within one radio frame. Therefore, a minimum period for measuring the neighbor cell may be set to 20ms, and the number of measurement periods T is N $\times$ 20, where N is a natural number, which may be configured according to a situation of the ultra-far coverage communication system. Within T + 1 measurement periods, the narrow beam 3 points to the first neighbor station for measurement. Within T + m measurement periods, the narrow beam 3 points to the m-th neighbor station for measurement. Within all measurement periods, the narrow beam 1 and the narrow beam 2 always point to the serving cell.

It is to be noted that although the embodiment of the present disclosure is described by using the case where the duration of the radio frame is 20ms as an example, the present application is not limited thereto, and the radio frame may be configured to have other durations according to situations.

Based on that the terminal simultaneously supports three narrow beams, in the wireless communication method for sharing spectrum resources provided in the embodiment of the present disclosure, the pointing direction and pattern of the communication beam may be determined according to the physical position of the base station of the serving cell, the direction of the interference signal, and the orientation of the airplane.

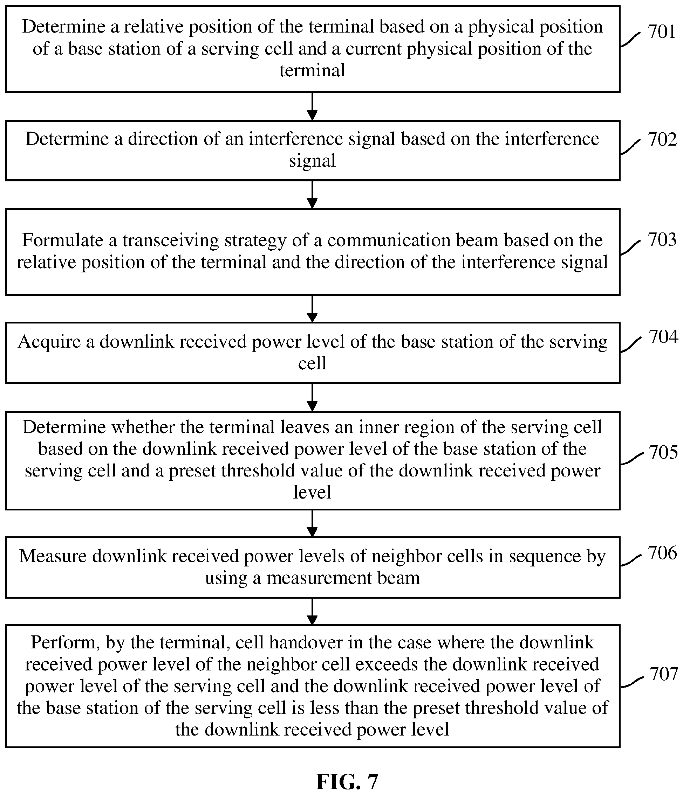

FIG. 7 is a flowchart of another wireless communication method for sharing spectrum resources according to an embodiment of the present disclosure. Referring to FIG. 7, the wireless communication method for sharing spectrum resources includes the following.

In 701, a relative position of the terminal is determined based on a physical position of a base station of a serving cell and a current physical position of the terminal.

In 701, a manner of determining the physical position of the base station of the serving cell and the current physical position of the terminal and a manner of determining the relative position of the terminal based on the physical position of the base station of the serving cell and the current physical position of the terminal are the same as that in 101 of the preceding embodiment. The details are not repeated here.

In some embodiments, the terminal periodically reports physical information of the terminal to the base station of the serving cell through the air interface. For example, a period for the terminal to report the physical information may be 1 second, 5 seconds, 10 seconds, or 1 minute and may be set according to actual situations, which is not limited in this embodiment. To improve the forming accuracy, the period for the terminal to report the physical information may be 1 second.

In some embodiments, the terminal reports the physical information of the terminal to the base station of the serving cell in a time-triggered manner. For example, a fixed trigger time is set at the terminal. When the time reaches the set trigger time, the terminal reports the physical position to the base station of the serving cell.

In some embodiments, the physical information of the terminal includes information such as latitude and longitude, altitude, orientation, and speed of the terminal.

In 702, a direction of an interference signal is determined based on the interference signal.

The interference signal is from the terrestrial communication system sharing a frequency with the communication system. The terminal determines the direction of the interference signal according to the received interference signal, so as to reduce the interference to the terrestrial communication system.

In 703, a transceiving strategy of a communication beam is formulated based on the relative position of the terminal and the direction of the interference signal.

In 703, the pointing direction and pattern of the communication beam transmitted by the terminal to the base station of the serving cell are the same as those in 103. The details are not repeated here.

In 704, a downlink received power level of the base station of the serving cell is acquired.

In 705, whether the terminal leaves an inner region of the serving cell is determined based on the downlink received power level of the base station of the serving cell and a preset threshold value of the downlink received power level.

In 705, the threshold value of the downlink received power level is a set value and may be set according to situations. When the downlink received power level of the serving cell received by the terminal is less than the threshold value of the downlink received power level, it is considered that the terminal has left the inner region of the serving cell and the cell handover may occur.

In 706, downlink received power levels of neighbor cells are measured in sequence by using a measurement beam.

The neighbor cells refer to cells adjacent to the serving cell where the terminal is located. The measurement beam refers to a narrow beam pointing from the terminal to the neighbor cell. The downlink received power levels of the neighbor cells are obtained in sequence through the measurement beam.

In 707, the terminal performs cell handover in the case where the downlink received power level of the neighbor cell exceeds the downlink received power level of the serving cell and the downlink received power level of the base station of the serving cell is less than the preset threshold value of the downlink received power level.

In the case where the downlink received power level of the neighbor cell exceeds the downlink received power level of the serving cell, it indicates that the neighbor cell is superior to the current serving cell. In this case, the downlink received power level of the base station of the serving cell is less than the preset threshold value of the downlink received power level, and the terminal may select an opportunity to perform the cell handover.

In some embodiments, after 701, the method further includes calculating a distance between the terminal and the base station of the serving cell and an angle between the terminal and the base station of the serving cell based on the current physical position of the terminal and the physical position of the base station of the serving cell; obtaining time offset compensation of an uplink signal based on the distance between the terminal and the base station of the serving cell and the angle between the terminal and the base station of the serving cell; and compensating the uplink signal of the terminal based on the time offset compensation of the uplink signal.

The time offset compensation is calculated in the same manner as in the formula (2) and the formula (3) of the preceding embodiment. The details are not repeated here.

In other embodiments, on other interference combined subframes of the ultra-far coverage communication system and the terrestrial communication system, according to the load or interference case of the ultra-far coverage communication system and the terrestrial communication system, the scheduling and coordinating solution of the ultra-far coverage communication system and the terrestrial communication system may be performed in the frequency domain, that is, subframes corresponding to the ultra-far coverage communication system and the terrestrial communication system are scheduled such that the subframes are distributed at different frequency domain positions, thereby reducing the mutual interference.

In some embodiments, the time offset compensation and the frequency offset compensation of the uplink signal are obtained based on the distance between the terminal and the base station of the serving cell and the angle between the terminal and the base station of the serving cell, and then the uplink signal of the terminal is compensated based on the time offset compensation and the frequency offset compensation of the uplink signal, that is, the uplink signal is pre-compensated for the time offset and frequency offset.

In some embodiments, to reduce the interference between the ultra-far coverage communication system and the terrestrial communication system, the base station and the antenna of the ultra-far coverage communication system are as far away from the base station and the antenna of the terrestrial communication system as possible, that is, the interference between the ultra-far coverage communication system and the terrestrial communication system is reduced by means of physical isolation.

To further reduce the interference between the ultra-far coverage communication system and the terrestrial communication system, the communication beam in this embodiment is a beam having a radio frame slot structure, and the ultra-far coverage communication system and the terrestrial communication system exchange information, such as a time-frequency domain position of resource allocation, the level of interference, and scheduling information of the system.

In some embodiments, a position of an interfered downlink slot of the terrestrial communication system is acquired; and an uplink slot position corresponding to the position of the interfered downlink slot in the communication beam stops to be called based on the position of the interfered downlink slot of the terrestrial communication system. The terrestrial communication system and the ultra-far coverage communication system where the terminal is located are different same-frequency systems.

For example, the terrestrial communication system informs the ultra-far coverage communication system of the position of the interfered slot, and the terminal using the ultra-far coverage communication system stops downlink scheduling at the corresponding slot D and configures the slot to be N subframes, thereby reducing uplink slot interference to the terrestrial communication system.

In the wireless communication method for sharing spectrum resources provided in the embodiment of the present disclosure, the relative position of the terminal is determined based on the physical position of the base station of the serving cell and the current physical position of the terminal, the direction of the interference signal is determined based on the interference signal, and the transceiving strategy of the communication beam is formulated based on the relative position of the terminal and the direction of the interference signal, that is, the pointing direction and pattern of the communication beam are determined based on the relative position of the terminal with respect to the base station of the serving cell and the direction of the interference signal. In this manner, on the basis of sharing spectrum resources and complying with relatively small transmit power, ultra-far distance (greater than 100 km) transmission is achieved, and the interference with the terrestrial communication system can be reduced.

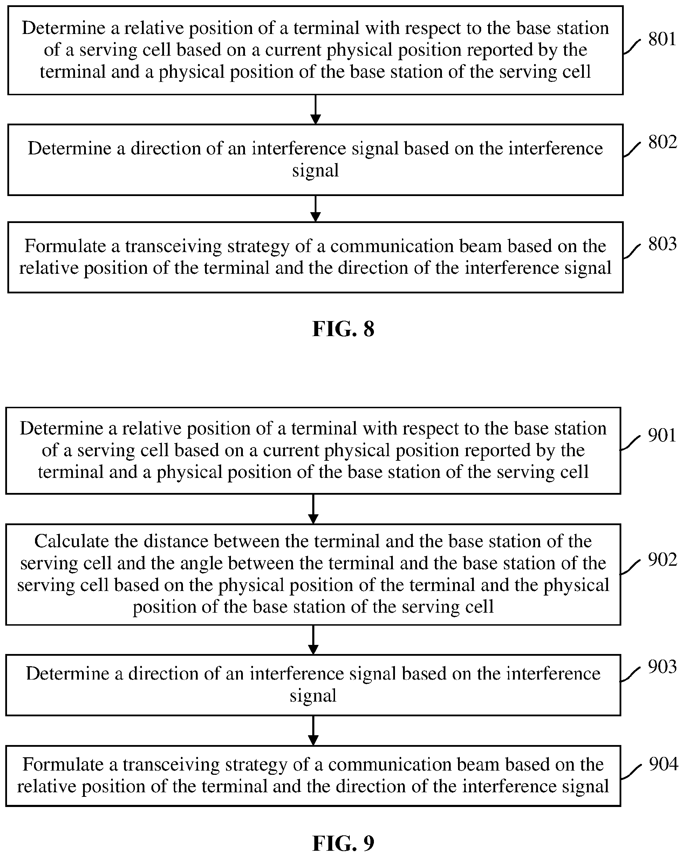

An embodiment of the present disclosure provides a wireless communication method for sharing spectrum resources. The method is applied to a base station of an ultra-far coverage communication system. FIG. 8 is a flowchart of another wireless communication method for sharing spectrum resources according to an embodiment of the present disclosure. Referring to FIG. 8, the wireless communication method for sharing spectrum resources includes the following. In 801, a relative position of a terminal with respect to the base station of a serving cell is determined based on a current physical position reported by the terminal and a physical position of the base station of the serving cell.

The terminal obtains the current physical position through the satellite positioning system such as the GPS and sends the current physical position to the base station of the serving cell. The physical position of the terminal includes, but is not limited to, information such as the longitude, latitude, and altitude of the terminal.

To ensure the forming accuracy of the communication beam received and transmitted by the terminal, a period for the terminal to report the position of the terminal may be set to 1 second, that is, the terminal reports the physical position to the serving cell every 1 second.

In some embodiments, the relative position of the terminal with respect to the base station of the serving cell is determined based on the longitude, latitude, and altitude of the terminal and the longitude, latitude, and altitude of the base station of the serving cell.

In 802, a direction of an interference signal is determined based on the interference signal.

The interference signal is from a third party communication system sharing a frequency with a current communication system, for example, the 5G terrestrial communication system.

In 803, a transceiving strategy of a communication beam is formulated based on the relative position of the terminal and the direction of the interference signal.

In some embodiments, the transceiving strategy of the base station of the serving cell includes a pointing direction and a pattern of the communication beam from the base station of the serving cell to the terminal. The base station of the serving cell specifies the pointing direction and pattern of the communication beam towards the terminal according to the relative position of the base station of the serving cell with respect to the terminal and the direction of the interference signal. The communication beam includes a transmit communication beam and a receive communication beam, where the transmit communication beam is configured for sending a communication signal to the terminal, and the receive communication beam is configured for receiving the communication signal from the terminal.

In this embodiment, the transmitted and received communication beams between the base station of the serving cell and the terminal may be radio frequency analog beams or baseband digital beams.

In some embodiments, the base station of the serving cell adopts a forming antenna, calculates an AoA or a DOA through a beam scanning algorithm based on the relative position of the terminal, obtains a forming weight value, and obtains the positioning direction and pattern of the communication beam towards the terminal based on the forming weight value.

In some embodiments, to support a communication system with a coverage radius of more than 300 km, the communication beam is a beam having a radio frame slot structure.

Since a cell coverage distance of the ultra-far coverage communication system is relatively large, far exceeding the maximum coverage distance defined by a normal NR protocol, a time offset and a frequency offset of the communication beam exist, increasing the design difficulty and implementation complexity of the wireless communication system.

FIG. 9 is a flowchart of another wireless communication method for sharing spectrum resources according to an embodiment of the present disclosure. Referring to FIG. 9, the wireless communication method for sharing spectrum resources includes the following.

In 901, a relative position of a terminal with respect to the base station of a serving cell is determined based on a current physical position reported by the terminal and a physical position of the base station of the serving cell.

To reduce the design difficulty and implementation complexity of the wireless communication system, after 801, the method further includes the following.

In 902, the distance between the terminal and the base station of the serving cell and the angle between the terminal and the base station of the serving cell are calculated based on the physical position of the terminal and the physical position of the base station of the serving cell.

Time offset compensation and frequency offset compensation of a downlink signal are obtained based on the distance between the terminal and the base station of the serving cell and the angle between the terminal and the base station of the serving cell; and an uplink signal of the terminal is compensated based on the time offset compensation of the downlink signal.

In this embodiment, the serving cell calculates the distance between the terminal and the base station of the serving cell by using the acquired current physical position of the terminal and calculates an initial coarse time offset according to a distance propagation formula in an initial access stage or a handover stage, so as to actively perform compensation and adjustment on the communication beam transmitted in the uplink. The time offset compensation may be calculated through the formula (2) and the formula (3) in the same manner as in 302 of the preceding embodiment. The details are not repeated here.

In 903, a direction of an interference signal is determined based on the interference signal.

The interference signal is from the terrestrial communication system sharing a frequency with the ultra-far coverage communication system. After receiving the interference signal, the base station of the serving cell determines the direction of the interference signal according to the interference signal, so as to reduce the interference to the terrestrial communication system.

In 904, a transceiving strategy of a communication beam is formulated based on the relative position of the terminal and the direction of the interference signal.

In some embodiments, the transceiving strategy of the base station of the serving cell includes a pointing direction and a pattern of the communication beam from the base station of the serving cell to the terminal. The base station of the serving cell specifies the pointing direction and pattern of the communication beam towards the terminal according to the relative position of the base station of the serving cell with respect to the terminal and the direction of the interference signal. The communication beam includes a transmit communication beam and a receive communication beam, where the transmit communication beam is configured for sending a communication signal to the terminal, and the receive communication beam is configured for receiving the communication signal from the terminal.

As shown in FIG. 2, after receiving the interference signal of the 5G base station, the base station of the serving cell adjusts the pattern of the communication beam based on the interference signal and forms the null at the interference position. At the same time, the base station of the serving cell adjusts the pointing direction of the communication beam based on the relative position of the base station of the serving cell with respect to the terminal so that the communication beam from the base station of the serving cell to the terminal is the strongest.

In some embodiments, the base station of the serving cell obtains an expected pointing direction of the communication beam based on the relative position of the terminal and then calculates an optimal transmit weight value based on the interference signal and the expected pointing direction (of the terrestrial communication system) using the maximum signal-to-noise ratio criterion, so as to form the null at the interference position, thereby reducing the interference level while obtaining the receive gain.

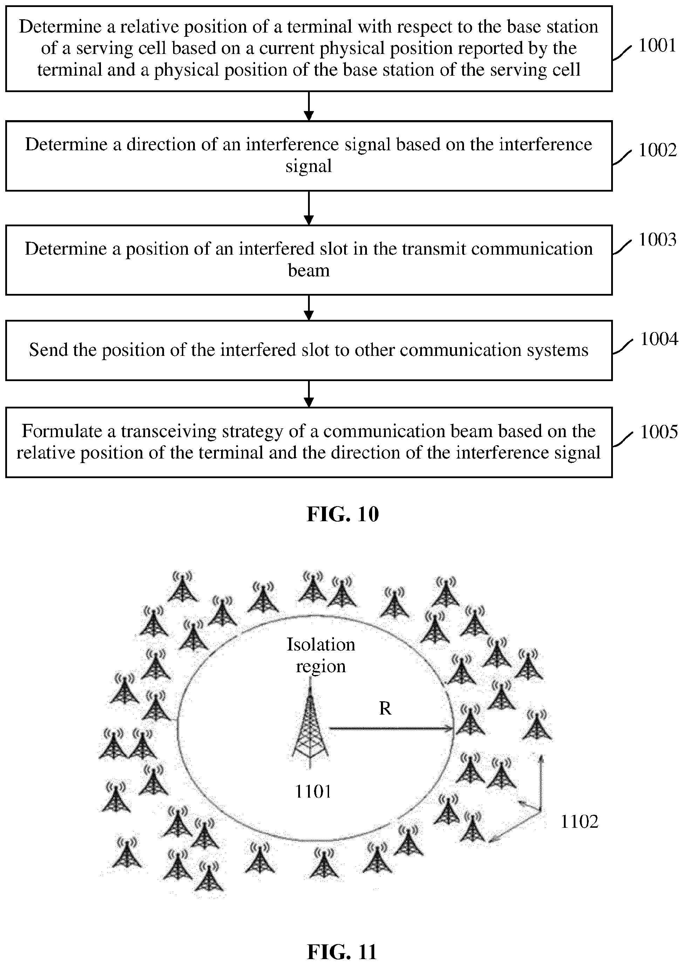

FIG. 10 is a flowchart of another wireless communication method for sharing spectrum resources according to an embodiment of the present disclosure. Referring to FIG. 10, the wireless communication method for sharing spectrum resources includes the following.

In 1001, a relative position of a terminal with respect to the base station of a serving cell is determined based on a current physical position reported by the terminal and a physical position of the base station of the serving cell.

In 1002, a direction of an interference signal is determined based on the interference signal.

In 1003, a position of an interfered slot in the transmit communication beam is determined.

In some embodiments, the communication beam is a beam having a radio frame slot structure. For a structure of the radio frame, reference may be made to FIG. 4. The radio frame has a fixed duration of 20ms and includes 40 slots, each of which occupies 0.5ms. A GP is 2ms, occupies four slots, and can support a cell coverage radius of up to 300 km. The number of uplink slots U is 6, and the number of downlink slots D is 30, where definitions of an RB and an OFDM symbol in each slot are consistent with a 3GPP 5G protocol.

In this embodiment, the terrestrial communication system and the ultra-far coverage communication system where the terminal is located are different same-frequency systems, and a downlink slot of the terrestrial communication system may cause interference to the uplink of the base station of the serving cell. When interfered by the terrestrial communication system, the base station of the serving cell sends the interfered slot to the terrestrial communication system such that the terrestrial communication system adjusts the downlink slot.

In 1004, the position of the interfered slot is sent to a third party communication system.

The third party communication system may be a 3G, 4G or 5G terrestrial communication system. In some embodiments, information may be exchanged between the ultra-far coverage communication system and the terrestrial communication system. When interfered by the terrestrial communication system, the ultra-far coverage communication system may send the position of the interfered slot to the terrestrial communication system. The base station of the serving cell sends the position of the slot interfered by the terrestrial communication system to the terrestrial communication system and the terrestrial communication system stops calling a downlink slot position corresponding to the position of the interfered slot, thereby reducing the interference to the ultra-far coverage communication system. For example, the position of the interfered slot of the ultra-far coverage communication system is U, and the terrestrial communication system configures a downlink slot at the same time domain position as the interfered slot to be N subframes, thereby reducing the uplink slot interference to the ultra-far coverage communication system.

As shown in FIG. 5B, in the frame structure of the ultra-far coverage communication system, uplink slots U interfered by the terrestrial communication system are the seventh slot to the twelfth slot, and the terrestrial communication system configures the seventh slot to the twelfth slot to be N subframes based on the interfered uplink slots U in the ultra-far coverage communication system, that is, the seventh slot to the twelfth slot stop to be called, thereby reducing the uplink slot interference to the ultra-far coverage communication system.

To reduce the mutual interference between the ultra-far coverage communication system and the terrestrial communication system, not only a time domain of a coordinated subframe but also a frequency domain of the coordinated subframe can be scheduled, that is, subframes corresponding to the ultra-far coverage communication system and the terrestrial communication system are distributed at different frequency domain positions, and a scheduling principle of frequency domain positions is the same as that of time domain positions. The details are not repeated here. In 1005, a transceiving strategy of a communication beam is formulated based on the relative position of the terminal and the direction of the interference signal.

In 1005, the base station of the serving cell dynamically adjusts the pointing direction and pattern of the communication beam towards the terminal based on the relative position of the terminal and the direction of the interference signal.

In this embodiment, the base station of the serving cell uses the array antenna with the adjustable beam pointing direction, that is, a forming antenna, and the forming antenna dynamically adjusts the pointing direction and pattern of the communication beam towards the terminal based on the relative position of the terminal, that is, an AoA or a DOA is calculated through a beam scanning algorithm based on the relative position of the terminal, a forming weight value is obtained, and the pointing direction and pattern of the communication beam are obtained based on the forming weight value.

When the base station of the serving cell is interfered by the terrestrial communication system, the pattern of the communication beam is adjusted, that is, the communication beam is adjusted according to the direction of the interference signal, a null is formed at a position where the interference signal is relatively strong, and at the same time, the strength of the communication beam pointing to the position of the terminal is improved, as shown by a dot-shaped dashed line in FIG. 2.

In some embodiments, the base station of the serving cell obtains an expected pointing direction of the communication beam based on the relative position of the terminal and then calculates an optimal transmit weight value based on the interference signal and the expected pointing direction using the maximum signal-to-noise ratio criterion, so as to form the null at the interference position, thereby reducing the interference level while obtaining the receive gain.

To reduce the interference between the ultra-far coverage communication system and the terrestrial communication system, the base station and the antenna of the ultra-far coverage communication system are as far away from the base station and the antenna of the terrestrial communication system as possible, that is, the interference between the ultra-far coverage communication system and the terrestrial communication system is reduced by means of physical isolation.

FIG. 11 is a diagram illustrating geographic locations of an ultra-far coverage communication system and a terrestrial communication system according to an embodiment of the present disclosure. As shown in FIG. 11, a coverage radius of the ultra-far coverage communication system may generally reach 300 km, and one isolation region is formed between a base station 1101 of the ultra-far coverage communication system and a third party communication base station 1102, where an isolation distance R may be 10 km, and the isolation region accounts for 1% of a coverage region of the ultra-far coverage communication system.

Since the distance covered by the ultra-far coverage communication system is relative large, which is much greater than a maximum coverage distance defined by a normal base station protocol, the communication beam may be pre-compensated with a coarse time offset, thereby reducing the design difficulty and implementation complexity of the communication system.

In this embodiment, the base station of the serving cell calculates the distance between the terminal and the base station of the serving cell by using the acquired position of the terminal and calculates an initial coarse time offset according to a distance propagation formula in an initial access stage or a handover stage, so as to actively perform compensation and adjustment on the communication beam transmitted in the downlink.

To ensure the selection and forming accuracy of communication beams of a downlink cell-level channel and a downlink user-level channel in the ultra-far coverage communication system, the terminal needs to report physical position information of the terminal to the base station of the serving cell where the terminal is located. The terminal may periodically report the physical position information through the air interface or may report the physical position information of the terminal in a time-triggered manner.

In some embodiments, the base station of the serving cell transmits the downlink cell-level channel in a spatial domain broadcast forming beam manner or supports multiple spatial domain broadcast forming beams in a time domain alternate transmission manner.

In some embodiments, the downlink user-level channel transmitted by the base station of the serving cell uses baseband frequency domain beamforming; or an AoA is calculated according to the physical position of the base station of the serving cell and the physical position reported by the terminal, so as to calculate a forming weight value; or the base station of the serving cell may acquire a downlink forming weight value according to uplink received data, so as to ensure the selection and forming accuracy of beams of the downlink cell-level channel and the downlink user-level channel in the ultra-far coverage communication system.

In this embodiment, for the downlink cell-level channel, the transmit power may be appropriately increased while beamforming, so as to improve the stability of the downlink signal. For the downlink user-level channel, narrow beamforming may be used for increasing the coverage distance and reducing the interference to the ground.

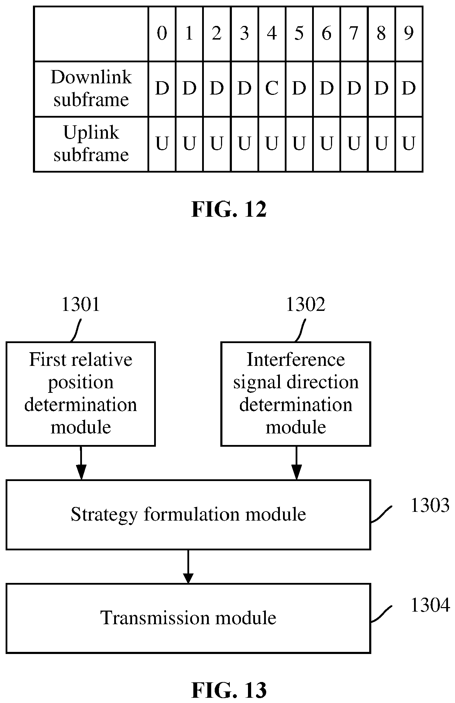

In this embodiment, the ultra-far coverage communication system uses a frequency-division multiple access frequency-division duplexing (FDD) mode, and the terrestrial communication system also uses the FDD mode. Therefore, an uplink and downlink subframe ratio of the ultra-far coverage communication system is consistent with that of the terrestrial communication system, and the time of the two systems is synchronized. As shown in FIG. 12, the interference between the ultra-far coverage communication system and the terrestrial communication system occurs between same subframe types, that is, an uplink subframe U or a downlink subframe D interfere with each other, and no interference occurs between different subframe types. The mutual interference is significantly improved compared with that in a time-division multiple access TDD system.

In the wireless communication method for sharing spectrum resources provided in the embodiment of the present disclosure, the relative position of the terminal with respect to the base station of the serving cell is determined based on the current physical position reported by the terminal and the physical position of the base station of the serving cell; the transceiving strategy of the communication beam is formulated based on the relative position of the terminal and the direction of the interference signal, that is, the pointing direction and pattern of the communication beam are dynamically adjusted. In this manner, on the basis of sharing spectrum resources and complying with relatively small transmit power, ultra-far distance transmission is achieved, and the interference with the terrestrial communication system can be reduced.

An embodiment of the present disclosure provides a terminal for sharing spectrum resources. FIG. 13 is a block diagram illustrating a principle of a terminal for sharing spectrum resources according to an embodiment of the present disclosure. Referring to FIG. 13, the terminal for sharing spectrum resources includes a first relative position determination module 1301, an interference signal direction determination module 1302, a strategy formulation module 1303, and a transmission module 1304.

The first relative position determination module 1301 is configured to determine a relative position of the terminal based on a physical position of a base station of a serving cell and a current physical position of the terminal.

The base station of the serving cell refers to a base station of the ultra-far coverage communication system. Unlike a base station of the terrestrial communication system, a coverage radius of the base station of the ultra-far coverage communication system is more than 100 km. The physical position of the base station of the serving cell is basically fixed, and may be obtained through a satellite positioning system such as the GPS, or may be prestored in the terminal. The current physical position of the terminal may be obtained through a positioning module such as the GPS, and the current physical position of the terminal includes information such as the longitude, latitude, and altitude.

The interference signal direction determination module 1302 is configured to determine a direction of an interference signal based on the interference signal, where the interference signal is from a third party communication system sharing a frequency with a current communication system. The strategy formulation module 1303 is configured to formulate a transceiving strategy of a communication beam based on the relative position of the terminal and the direction of the interference signal.

In this embodiment, the strategy formulation module 1303 calculates an AoA or a DOA through a beam scanning algorithm based on the relative position of the terminal, obtains a forming weight value, and obtains the pointing direction and pattern of the communication beam based on the forming weight value.

The transmission module 1304 is configured to receive and/or transmit the communication beam based on the transceiving strategy.

In this embodiment, the transmission module 1304 adopts an array antenna with a dynamically adjustable beam pointing direction, and the transmitted communication beam may be a radio frequency analog beam or a baseband digital beam.

The embodiment of the present disclosure provides the terminal for sharing spectrum resources. The first relative position determination module is configured to determine a relative position of the terminal based on a physical position of a base station of a serving cell and a current physical position of the terminal. The interference signal direction determination module is configured to determine a direction of an interference signal based on the interference signal. The strategy formulation module is configured to formulate a transceiving strategy of a communication beam based on the relative position of the terminal and the direction of the interference signal. The transmission module is configured to receive and/or transmit the communication beam based on the transceiving strategy. In this manner, on the basis of sharing spectrum resources and complying with relatively small transmit power, ultra-far distance transmission is achieved, and the interference with the terrestrial communication system can be reduced.

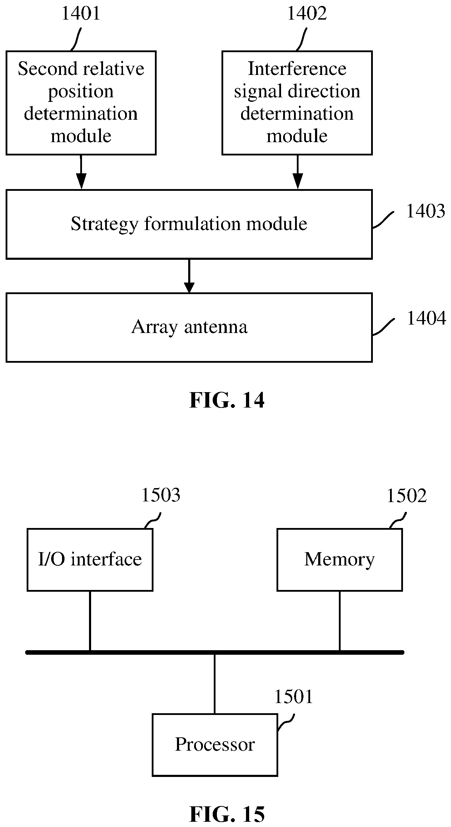

An embodiment of the present disclosure provides a base station for sharing spectrum resources. FIG. 14 is a principle block diagram of another terminal for sharing spectrum resources according to an embodiment of the present disclosure. Referring to FIG. 14, the base station for sharing spectrum resources includes a second relative position determination module 1401, an interference signal direction determination module 1402, a strategy formulation module 1403, and an array antenna 1404.

The second relative position determination module 1401 is configured to determine a relative position of a terminal based on a current physical position reported by the terminal and a physical position of the base station of a serving cell.

After the base station is established, the physical position of the base station of the serving cell may be obtained by a satellite positioning system such as the GPS or by other measurement means. The second relative position determination module 1401 determines the relative position of the terminal with respect to the base station of the serving cell based on the longitude, latitude, and altitude of the terminal and the longitude, latitude, and altitude of the base station of the serving cell.

The interference signal direction determination module 1402 is configured to determine a direction of an interference signal based on the interference signal.

The interference signal is from a third party communication system sharing a frequency with a current communication system.

The strategy formulation module 1403 is configured to formulate a transceiving strategy of a communication beam based on the relative position of the terminal and the direction of the interference signal.

The array antenna 1404 is configured to receive and/or transmit the communication beam based on the transceiving strategy.

The array antenna 1404 is a forming antenna with an adjustable beam pointing direction. The array antenna 1404 may calculate an AoA and a DOA through a beam scanning algorithm according to the relative position of the terminal, obtain a forming weight value, and obtain the pointing direction and pattern of the communication beam towards the terminal based on the forming weight value, or the array antenna 1404 is configured to dynamically adjust the pointing direction and pattern of the communication beam towards the base station of the serving cell based on the relative position of the terminal and the direction of the interference signal.

The embodiment of the present disclosure provides the base station for sharing spectrum resources. The second relative position determination module is configured to determine a relative position of a terminal based on a current physical position reported by the terminal and a physical position of the base station of a serving cell. The interference signal direction determination module is configured to determine a direction of an interference signal based on the interference signal. The strategy formulation module is configured to formulate a transceiving strategy of a communication beam based on the relative position of the terminal and the direction of the interference signal. The array antenna is configured to receive and/or transmit the communication beam based on the transceiving strategy. In this manner, on the basis of sharing spectrum resources and complying with relatively small transmit power, ultra-far distance transmission is achieved, and the interference with the terrestrial communication system can be reduced.

An embodiment of the present disclosure provides a wireless communication system for sharing spectrum resources, including an ultra-far coverage base station and a third party communication base station. The ultra-far coverage base station is the base station for sharing spectrum resources provided in the preceding embodiments, and a distance between the ultra-far coverage base station and the third party communication base station exceeds a preset physical isolation distance.

In some embodiments, the third party communication base station refers to a base station in 3G, 4G, and 5G communication systems, and the ultra-far coverage base station refers to a base station having a coverage range of more than 300 km.

In some embodiments, the mutual interference between the ultra-far coverage base station and the third party communication base station is reduced by means of physical isolation. As shown in FIG. 11, the preset physical isolation distance is 100 km, and then a minimum distance between the ultra-far coverage base station and the third party communication base station is configured to be more than 100 km.

The preset physical isolation distance may be set according to actual situations, such as 150 km or 200 km.

Referring to FIG. 15, an electronic device provided by an embodiment of the present disclosure includes one or more processors 1501, a memory 1502 storing one or more programs, and one or more I/O interfaces 1503. The one or more programs, when executed by the one or more processors, cause the one or more processors to perform any wireless communication method for sharing spectrum resources described above. The one or more I/O interfaces are connected between the one or more processors and the memory and configured to implement an information interaction between the one or more processors and the memory.

The processor 1501 is a device having a data processing capability, including, but not limited to, a central processing unit (CPU) or the like. The memory 1502 is a device having a data storage capability, including, but not limited to, a random-access memory (RAM) such as a synchronous dynamic random-access memory (SDRAM), a double data rate SDRAM (DDR SDRAM), a read-only memory (ROM), an electrically erasable programmable read-only memory (EEPROM), and a flash memory. The I/O interface (a read/write interface) 1503 is connected between the processor 1501 and the memory 1502 and can implement the information interaction between the processor 1501 and the memory 1502, including, but not limited to, a data bus or the like.

In some embodiments, the processor 1501, the memory 1502, and the I/O interface 1503 are connected to each other via a bus and further connected to other components of a computing device. An embodiment of the present disclosure provides a computer-readable medium, which is configured to store a computer program which, when executed by a processor, causes the processor to perform any wireless communication method for sharing spectrum resources described above. It is to be understood by those of ordinary skill in the art that some or all steps of the preceding method and function modules/units in the preceding system or apparatus may be implemented as software, firmware, hardware and suitable combinations thereof. In the hardware implementation, the division of the function modules/units in the preceding description may not correspond to the division of physical components. For example, one physical component may have multiple functions, or one function or step may be performed cooperatively by multiple physical components. Some or all physical components may be implemented as software executed by a processor such as a central processing unit, a digital signal processor or a microprocessor, may be implemented as hardware, or may be implemented as integrated circuits such as application-specific integrated circuits. Such software may be distributed on computer-readable media. The computer-readable media may include computer storage media (or non-transitory media) and communication media (or transitory media). As is known to those of ordinary skill in the art, the term computer storage media include volatile and nonvolatile media and removable and non-removable media implemented in any method or technology for storing information (such as computer-readable instructions, data structures, program modules or other data). The computer storage media include, but are not limited to, an RAM, an ROM, an EEPROM, a flash memory or other memory technologies, a compact disc read-only memory (CD-ROM), a digital versatile disc (DVD) or other optical disc storages, a magnetic cassette, a magnetic tape, a magnetic disk or other magnetic storage devices, or any other medium configured to store desired information and can be accessed by a computer. In addition, as is known to those of ordinary skill in the art, the communication media generally include computer-readable instructions, data structures, program modules, or other data in modulated data signals such as carriers or other transmission mechanisms, and may include any information delivery medium.

## Claims

1. A wireless communication method for sharing spectrum resources, applied to a terminal, comprising:

   determining a relative position of the terminal with respect to a base station of a serving cell based on a physical position of the base station of the serving cell and a current physical position of the terminal;
   determining a direction of an interference signal based on the interference signal, wherein the interference signal is from a third party communication system sharing a frequency with a current communication system; and
   formulating a transceiving strategy of a communication beam based on the relative position and the direction of the interference signal.

2. The method of claim 1, wherein the transceiving strategy comprises adjusting a pointing direction and a pattern of the communication beam of the base station of the serving cell.

3. The method of claim 1, wherein the communication beam comprises a transmit communication beam and a receive communication beam, wherein the transmit communication beam is configured for sending a communication signal to the base station of the serving cell; and
   the receive communication beam comprises a service receive communication beam and a measurement receive communication beam, wherein the service receive communication beam is configured for receiving the communication signal from the base station of the serving cell, and the measurement receive communication beam is configured for receiving a measurement signal from a neighbor cell, wherein the neighbor cell is a neighbor cell of the serving cell.

4. The method of claim 3, wherein before or after the determining the direction of the interference signal based on the interference signal, the method further comprises:

   acquiring a downlink slot position of the interfered third party communication system; and
   stopping calling an uplink slot position corresponding to the downlink slot position of the third party communication system in the communication beam based on the downlink slot position of the third party communication system.

**5.** The method of claim 3, wherein before or after the formulating the transceiving strategy of the communication beam based on the relative position and the direction of the interference signal, the method further comprises:

acquiring a downlink received power level of the base station of the serving cell; and determining whether the terminal leaves an inner region of the serving cell based on the downlink received power level of the base station of the serving cell and a preset threshold value of the downlink received power level.

**6.** The method of claim 5, wherein the determining whether the terminal leaves the inner region of the serving cell based on the downlink received power level of the base station of the serving cell and the preset threshold value of the downlink received power level further comprises:

acquiring a downlink received power level of the neighbor cell by using a measurement beam; measuring downlink received power levels of neighbor cells in sequence; and performing, by the terminal, cell handover in a case where the downlink received power level of the neighbor cell exceeds the downlink received power level of the base station of the serving cell and the downlink received power level of the base station of the serving cell is less than the preset threshold value of the downlink received power level.

**7.** The method of claim 1, wherein after the determining the relative position of the terminal with respect to the base station of the serving cell based on the physical position of the base station of the serving cell and the current physical position of the terminal, the method further comprises:

calculating a distance between the terminal and the base station of the serving cell and an angle between the terminal and the base station of the serving cell based on the current physical position of the terminal and the physical position of the base station of the serving cell; obtaining time offset compensation of an uplink signal based on the distance between the terminal and the base station of the serving cell and the angle between the terminal and the base station of the serving cell; and compensating the uplink signal of the terminal based on the time offset compensation of the uplink signal.

**8.** The method of any one of claims 1 to 7, wherein before or after the determining the relative position of the terminal with respect to the base station of the serving cell based on the physical position of the base station of the serving cell and the current physical position of the terminal, the method further comprises:

reporting physical information of the terminal to the base station of the serving cell periodically through an air interface, or reporting physical information of the terminal to the base station of the serving cell based on a time-triggered manner.

**9.** The method of any one of claims 1 to 7, wherein the communication beam is a radio frequency analog beam or a baseband digital beam.

**10.** A wireless communication method for sharing spectrum resources, applied to a base station, comprising:

determining a relative position of a terminal with respect to the base station of a serving cell based on a current physical position reported by the terminal and a physical position of the base station of the serving cell; determining a direction of an interference signal based on the interference signal, wherein the interference signal is from a third party communication system sharing a frequency with a current communication system; and formulating a transceiving strategy of a communication beam based on the relative position and the direction of the interference signal.

**11.** The method of claim 10, wherein the transceiving strategy comprises adjusting a pointing direction and a pattern of the communication beam toward the terminal.

**12.** The method of claim 11, wherein the communication beam comprises a transmit communication beam and a receive communication beam, wherein the transmit communication beam is configured for sending a communication signal to the terminal, and the receive communication beam is configured for receiving the communication signal from the terminal.

**13.** The method of claim 12, wherein before the formulating the transceiving strategy of the communication beam based on the relative position and the direction of the interference signal, the method further comprises:

determining a position of an interfered slot in the transmit communication beam; and sending the position of the interfered slot to the third party communication system so that the third party communication system stops calling a downlink slot position corresponding to the position of the interfered slot.

14. The method of any one of claims 10 to 13, further comprising at least one of the following: in a case where a downlink cell-level channel is transmitted, transmitting the communication beam in a spatial domain broadcast forming manner; or in a case where a downlink user-level channel is transmitted, transmitting the communication beam in a baseband frequency domain beamforming manner.

15. A terminal for sharing spectrum resources, comprising:

a relative position determination module, which is configured to determine a relative position of the terminal with respect to a base station of a serving cell based on a physical position of the base station of the serving cell and a current physical position of the terminal;
an interference signal direction determination module, which is configured to determine a direction of an interference signal based on the interference signal, wherein the interference signal is from a third party communication system sharing a frequency with a current communication system;
a strategy formulation module, which is configured to formulate a transceiving strategy of a communication beam based on the relative position and the direction of the interference signal; and
a transmission module, which is configured to perform at least one of: receiving the communication beam based on the transceiving strategy or transmitting the communication beam based on the transceiving strategy.

16. A base station for sharing spectrum resources, comprising:

a relative position determination module, which is configured to determine a relative position of a terminal with respect to the base station of a serving cell based on a current physical position reported by the terminal and a physical position of the base station of the serving cell;
an interference signal direction determination module, which is configured to determine a direction of an interference signal based on the interference signal, wherein the interference signal is from a third party communication system sharing a frequency with a current communication system;
a strategy formulation module, which is configured to formulate a transceiving strategy of a communication beam based on the relative position and the direction of the interference signal; and
an array antenna, which is configured to perform at least one of: receiving the communication beam based on the transceiving strategy or transmitting the communication beam based on the transceiving strategy.

17. A wireless communication system for sharing spectrum resources, comprising an ultra-far coverage base station and a third party communication base station, wherein the ultra-far coverage base station is the base station for sharing spectrum resources of claim 16, and a distance between the ultra-far coverage base station and the third party communication base station exceeds a preset physical isolation distance.

18. An electronic device, comprising:

at least one processor;
a memory storing at least one program, wherein the at least one program, when executed by the at least one processor, causes the at least one processor to perform the method of any one of claims 1 to 9 or claims 10 to 14; and
at least one input/output, I/O, interface, which is connected between the at least one processor and the memory and configured to implement an information interaction between the at least one processor and the memory.

19. A computer-readable medium, which is configured to store a computer program which, when executed by a processor, causes the processor to perform the method of any one of claims 1 to 9 or claims 10 to 14.

Determine a relative position of the terminal based on a physical position of a base station of a serving cell and a current physical position of the terminal — 101

Determine a direction of an interference signal based on the interference signal — 102

Formulate a transceiving strategy of a communication beam based on the relative position of the terminal and the direction of the interference signal — 103

**FIG. 1**

Uplink communication beam

Downlink communication beam

Interference signal

Base station of a serving cell

Terrestrial communication system

**FIG. 2**

Determine a relative position of the terminal based on a physical position of a base station of a serving cell and a current physical position of the terminal ⟋ 301

Obtain time offset compensation and frequency offset compensation of an uplink signal based on a distance between the terminal and the base station of the serving cell and an angle between the terminal and the base station of the serving cell ⟋ 302

Determine a direction of an interference signal based on the interference signal ⟋ 303

Formulate a transceiving strategy of a communication beam based on the relative position of the terminal and the direction of the interference signal ⟋ 304

**FIG. 3**

| 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 | 32 | 33 | 34 | 35 | 36 | 37 | 39 | 39 | 40 |
|---|---|---|---|---|---|---|---|---|---|---|---|---|---|---|---|---|---|---|---|---|---|---|---|---|---|---|---|---|---|---|---|---|---|---|---|---|---|---|---|
| D | GP | | | U | | | | | D | | | | | | | | | | | | | | | | | | | | | | | | | | | | | | |

**FIG. 4**

| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 | 32 | 33 | 34 | 35 | 36 | 37 | 38 | 39 | 40 |
|---|---|---|---|---|---|---|---|---|---|---|---|---|---|---|---|---|---|---|---|---|---|---|---|---|---|---|---|---|---|---|---|---|---|---|---|---|---|---|---|---|
| Ultra-far coverage communication system | D | GP | | | U | | | | | | | | D | D | N | N | D | D | D | D | D | D | N | N | D | D | D | D | D | D | D | D | D | N | N | D | D | D | D |
| Terrestrial communication system | D | S | U | D | D | D | S | U | D | D | D | S | U | D | D | D | S | U | D | D | | | | | | | | | | | | | | | | | | | | |

**FIG. 5A**

| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 | 32 | 33 | 34 | 35 | 36 | 37 | 38 | 39 | 40 |
|---|---|---|---|---|---|---|---|---|---|---|---|---|---|---|---|---|---|---|---|---|---|---|---|---|---|---|---|---|---|---|---|---|---|---|---|---|---|---|---|---|
| Ultra-far coverage communication system | D | | GP | | | | U | | | | | | D | D | D | D | D | D | D | D | D | D | D | D | D | D | D | D | D | D | D | D | D | D | D | D | D | D | D | D |
| Terrestrial communication system | D | S | U | N | | N | | N | | S | | U | | D | | D | | D | | S | | U | | D | | D | | D | | S | | U | | D | | D | | | | | |

**FIG. 5B**

Communication beam 1
Communication beam 2
Communication beam 3

Base station of a serving cell

Base station of a neighbour cell

**FIG. 6**

Determine a relative position of the terminal based on a physical position of a base station of a serving cell and a current physical position of the terminal  ⌐ 701

Determine a direction of an interference signal based on the interference signal  ⌐ 702

Formulate a transceiving strategy of a communication beam based on the relative position of the terminal and the direction of the interference signal  ⌐ 703

Acquire a downlink received power level of the base station of the serving cell  ⌐ 704

Determine whether the terminal leaves an inner region of the serving cell based on the downlink received power level of the base station of the serving cell and a preset threshold value of the downlink received power level  ⌐ 705

Measure downlink received power levels of neighbor cells in sequence by using a measurement beam  ⌐ 706

Perform, by the terminal, cell handover in the case where the downlink received power level of the neighbor cell exceeds the downlink received power level of the serving cell and the downlink received power level of the base station of the serving cell is less than the preset threshold value of the downlink received power level  ⌐ 707

**FIG. 7**

Determine a relative position of a terminal with respect to the base station of a serving cell based on a current physical position reported by the terminal and a physical position of the base station of the serving cell  / 801

Determine a direction of an interference signal based on the interference signal  / 802

Formulate a transceiving strategy of a communication beam based on the relative position of the terminal and the direction of the interference signal  / 803

**FIG. 8**

Determine a relative position of a terminal with respect to the base station of a serving cell based on a current physical position reported by the terminal and a physical position of the base station of the serving cell  / 901

Calculate the distance between the terminal and the base station of the serving cell and the angle between the terminal and the base station of the serving cell based on the physical position of the terminal and the physical position of the base station of the serving cell  / 902

Determine a direction of an interference signal based on the interference signal  / 903

Formulate a transceiving strategy of a communication beam based on the relative position of the terminal and the direction of the interference signal  / 904

**FIG. 9**

| Determine a relative position of a terminal with respect to the base station of a serving cell based on a current physical position reported by the terminal and a physical position of the base station of the serving cell | 1001 |
| --- | --- |

| Determine a direction of an interference signal based on the interference signal | 1002 |
| --- | --- |

| Determine a position of an interfered slot in the transmit communication beam | 1003 |
| --- | --- |

| Send the position of the interfered slot to other communication systems | 1004 |
| --- | --- |

| Formulate a transceiving strategy of a communication beam based on the relative position of the terminal and the direction of the interference signal | 1005 |
| --- | --- |

**FIG. 10**

**FIG. 11**

|  | 0 | 1 | 2 | 3 | 4 | 5 | 6 | 7 | 8 | 9 |
|---|---|---|---|---|---|---|---|---|---|---|
| Downlink subframe | D | D | D | D | C | D | D | D | D | D |
| Uplink subframe | U | U | U | U | U | U | U | U | U | U |

**FIG. 12**

1301

1302

```
┌─────────────────┐        ┌─────────────────┐
│  First relative  │        │   Interference   │
│    position      │        │ signal direction │
│  determination   │        │  determination   │
│     module       │        │     module       │
└─────────────────┘        └─────────────────┘
```

┌──────────────────────────────────────────┐
│        Strategy formulation module         │  1303
└──────────────────────────────────────────┘

┌──────────────────────────────────────────┐
│           Transmission module              │  1304
└──────────────────────────────────────────┘

**FIG. 13**

| 1401 | 1402 |
|---|---|
| Second relative position determination module | Interference signal direction determination module |

Strategy formulation module — 1403

Array antenna — 1404

**FIG. 14**

| 1503 | 1502 |
|---|---|
| I/O interface | Memory |

Processor — 1501

**FIG. 15**

## INTERNATIONAL SEARCH REPORT

International application No.

**PCT/CN2021/079010**

### A. CLASSIFICATION OF SUBJECT MATTER

H04W 16/14(2009.01)i; H04W 28/06(2009.01)i

According to International Patent Classification (IPC) or to both national classification and IPC

### B. FIELDS SEARCHED

Minimum documentation searched (classification system followed by classification symbols)

H04W; H04B; H04L

Documentation searched other than minimum documentation to the extent that such documents are included in the fields searched

Electronic data base consulted during the international search (name of data base and, where practicable, search terms used)

CNPAT, CNKI, EPODOC, WPI: 位置, 预期, 期望, 干扰, 方向, 调整, 波束, 方向, 指向, 零陷, 基站, 终端, 频谱, 频率, 频点, 共享, 相同, location, expectation, interference, direction, adjust, beam, direction, pointing, null, base station, BS, terminal, UE, spectrum, frequency, sharing, same

### C. DOCUMENTS CONSIDERED TO BE RELEVANT

| Category* | Citation of document, with indication, where appropriate, of the relevant passages | Relevant to claim No. |
|---|---|---|
| X | CN 107181519 A (BEIJING UNIVERSITY OF POSTS AND TELECOMMUNICATIONS) 19 September 2017 (2017-09-19)<br>description paragraphs 0004-0008, 0067-0164, figures 1-2 | 1-19 |
| X | CN 104052700 A (INNOFIDEI TECHNOLOGY CO., LTD.) 17 September 2014 (2014-09-17)<br>description paragraphs 0086-0109 | 1-19 |
| A | CN 103178881 A (ZTE CORPORATION) 26 June 2013 (2013-06-26)<br>entire document | 1-19 |
| A | CN 103765795 A (QUALCOMM INC.) 30 April 2014 (2014-04-30)<br>entire document | 1-19 |
| A | US 5448754 A (CORPORATE TECHNOLOGY PARTNERS) 05 September 1995 (1995-09-05)<br>entire document | 1-19 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **19 May 2021** | **26 May 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

# EP 4 161 123 A1

| Patent document cited in search report | | | Publication date (day/month/year) | Patent family member(s) | | | Publication date (day/month/year) |
|---|---|---|---|---|---|---|---|
| CN | 107181519 | A | 19 September 2017 | CN | 107181519 | B | 28 August 2020 |
| CN | 104052700 | A | 17 September 2014 | CN | 104052700 | B | 28 July 2017 |
| CN | 103178881 | A | 26 June 2013 | CN | 103178881 | B | 25 August 2017 |
| CN | 103765795 | A | 30 April 2014 | KR | 101799422 | B1 | 20 November 2017 |
| | | | | KR | 20150028853 | A | 16 March 2015 |
| | | | | WO | 2013025932 | A2 | 21 February 2013 |
| | | | | WO | 2013025932 | A3 | 16 May 2013 |
| | | | | EP | 2869481 | A1 | 06 May 2015 |
| | | | | CN | 103765795 | B | 21 September 2016 |
| | | | | EP | 2869480 | A1 | 06 May 2015 |
| | | | | JP | 5774787 | B2 | 09 September 2015 |
| | | | | EP | 2745430 | B1 | 10 June 2015 |
| | | | | JP | 2014526224 | A | 02 October 2014 |
| | | | | KR | 20140050106 | A | 28 April 2014 |
| | | | | US | 2013044611 | A1 | 21 February 2013 |
| | | | | EP | 2869481 | B1 | 20 February 2019 |
| | | | | US | 9882630 | B2 | 30 January 2018 |
| | | | | EP | 2869480 | B1 | 22 June 2016 |
| | | | | US | 2016043796 | A1 | 11 February 2016 |
| | | | | EP | 2745430 | A2 | 25 June 2014 |
| | | | | KR | 101543726 | B1 | 25 August 2015 |
| | | | | IN | 201400760 | P4 | 03 April 2015 |
| US | 5448754 | A | 05 September 1995 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010455319